(19) Europäisches Patentamt
European Patent Office
Office européen des brevets

(11) EP 4 047 046 A1

(12) # EUROPEAN PATENT APPLICATION
published in accordance with Art. 153(4) EPC

(43) Date of publication:
**24.08.2022 Bulletin 2022/34**

(21) Application number: **20877112.1**

(22) Date of filing: **12.10.2020**

(51) International Patent Classification (IPC):
***C08K 5/526*** *(2006.01)* ***C08L 27/12*** *(2006.01)*
***C08L 67/03*** *(2006.01)* ***C08L 69/00*** *(2006.01)*
***C08K 3/04*** *(2006.01)* ***C08K 3/36*** *(2006.01)*

(52) Cooperative Patent Classification (CPC):
**C08K 3/04; C08K 3/36; C08K 5/526; C08L 27/12; C08L 67/03; C08L 69/00**

(86) International application number:
**PCT/JP2020/038504**

(87) International publication number:
**WO 2021/075405 (22.04.2021 Gazette 2021/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.10.2019 JP 2019189405**

(71) Applicant: **Unitika Ltd.**
**Amagasaki-shi, Hyogo 660-0824 (JP)**

(72) Inventor: **NABESHIMA, Yutaka**
**Uji-shi, Kyoto 611-0021 (JP)**

(74) Representative: **Vossius & Partner**
**Patentanwälte Rechtsanwälte mbB**
**Siebertstraße 3**
**81675 München (DE)**

(54) **RESIN COMPOSITION AND MOLDED ARTICLE**

(57) The present invention provides a resin composition, from which a molded product excellent in a dust-generating resistance property, heat-resisting properties, a dimensional stability, sliding properties, mechanical properties and external appearance properties can be molded and which is excellent in a molding stability, and a molded product which is obtained by molding the same. The present invention relates to a resin composition comprising a polyarylate resin, a polycarbonate resin, silica particles having an average particle diameter of 0.4 to 12 μm, fluorine atom-containing polymer particles having an average particle diameter of 0.5 to 20 μm, and a particular phosphite ester compound, wherein a mass ratio of the polyarylate resin and the polycarbonate resin is 25/75 to 92/8, a content of the silica particles is 4 to 65 parts by mass with respect to 100 parts by mass of a total amount of the polyarylate resin and the polycarbonate resin, a content of the fluorine atom-containing polymer particles is 0.5 to 12 parts by mass with respect to 100 parts by mass of a total amount of the polyarylate resin and the polycarbonate resin, and a content of the phosphite ester compound is 0.008 to 1.2 parts by mass with respect to 100 parts by mass of a total amount of the polyarylate resin and the polycarbonate resin.



Processed by Luminess, 75001 PARIS (FR)

## Description

### TECHNICAL FIELD

The present invention relates to a resin composition and a molded product obtained by molding the resin composition.

### BACKGROUND ART

A camera module component having an imaging element such as a charge coupled device (CCD) and a complementary metal oxide semiconductor (CMOS) is used in a mobile phone, a game machine, a personal computer, an in-vehicle camera, a mobile phone terminal, and the like. In recent years, miniaturization and high performance have been further promoted, and development of a small camera module component has been advanced.

In an auto-focusing mechanism, a camera shake prevention mechanism, or the like of a camera module, a motor or the like in a lens is moved to perform focus adjustment and shake prevention. When such a mechanism is incorporated in a camera module, rubbing, friction, and the like occur between camera module components or between a camera module component and other components, and thus a camera module component surface is required to have a small dynamic friction coefficient (sliding properties).

Even if the camera module component has excellent sliding properties, on an imaging element surface and a lens surface in the camera module a black flaw and a blot are easily generated even by slight dust, and the camera performance may be deteriorated. Specifically, the camera module components are scraped due to rubbing, friction, or the like between the camera module components or between the camera module component and the other components, and fine resin pieces or the like cause dust and adhere to the lens surface or accumulate between the camera module components, which hinders the operation of the mechanical component. For this reason, in a resin material constituting the camera module component, it is required that generation of fragments and dust during production and use is suppressed (dust-generating resistance property).

In addition, soldering of electric wiring is generally performed on the camera module component. For this reason, precision components such as a lens unit and an actuator constituting a camera module component are required to have excellent dimensional stability even when exposed to a soldering temperature (up to about 150°C).

Furthermore, small reduction in a molecular weight of a resin (molding stability) by molding is also required. Further, it is also required that a molded product has excellent mechanical strength. Further, it is also required that a surface of the molded product is smooth without having a filler such as silica floating thereon (external appearance properties).

Therefore, a resin composition is known in which a baked polytetrafluoroethylene resin and a spherical silica are each contained in a specific amount with respect to a polyarylate resin and a polycarbonate resin in a specific ratio (Patent Literature 1).

In addition, a resin composition is known in which silica particles and a specific phosphite ester compound are each contained in a specific amount with respect to a polyarylate resin and a polycarbonate resin in a specific ratio (Patent Literature 2).

### CITATIONS LIST

### PATENT LITERATURES

Patent Literature 1: JP 2008-50488 A
Patent Literature 2: WO 2017/204078 A1

### SUMMARY OF INVENTION

### PROBLEMS TO BE SOLVED BY THE INVENTION

However, in the technique of Patent Literature 1, not only a molding stability is deteriorated, but also a sufficient dust-generating resistance property has failed to be obtained. In particular, regarding the dust-generating resistance property, specifically, under a more severe environment (for example, in an environment where rubbing occurs between components for a longer period of time), sufficient dust-generating resistance property has failed to be obtained.

In the technique of Patent Literature 2, under a more severe environment (for example, in an environment

where rubbing occurs between components for a longer period of time), sufficient dust-generating resistance property has also failed to be obtained.

An object of the present invention is to provide a resin composition, from which a molded product excellent in a dust-generating resistance property, heat-resisting properties, a dimensional stability, sliding properties, mechanical properties and external appearance properties can be molded and which is excellent in a molding stability, and a molded product which is obtained by molding the same.

MEANS FOR SOLVING PROBLEMS

As a result of intensive studies to solve the above problems, the present inventors have found that the above object can be achieved by using silica particles having a specific average particle diameter, fluorine atom-containing polymer particles having a specific average particle diameter, and a specific phosphite ester compound in a resin composition using a polyarylate resin and a polycarbonate resin in combination, and have reached the present invention.

The gists of the present invention are as follows.

<1> A resin composition comprising a polyarylate resin, a polycarbonate resin, silica particles having an average particle diameter of 0.4 to 12 μm, fluorine atom-containing polymer particles having an average particle diameter of 0.5 to 20 μm, and a phosphite ester compound represented by a general formula (I),

wherein a mass ratio of the polyarylate resin and the polycarbonate resin is 25/75 to 92/8,
a content of the silica particles is 4 to 65 parts by mass with respect to 100 parts by mass of a total amount of the polyarylate resin and the polycarbonate resin,
a content of the fluorine atom-containing polymer particles is 0.5 to 12 parts by mass with respect to 100 parts by mass of a total amount of the polyarylate resin and the polycarbonate resin, and
a content of the phosphite ester compound is 0.008 to 1.2 parts by mass with respect to 100 parts by mass of a total amount of the polyarylate resin and the polycarbonate resin:

[Chem. 1]

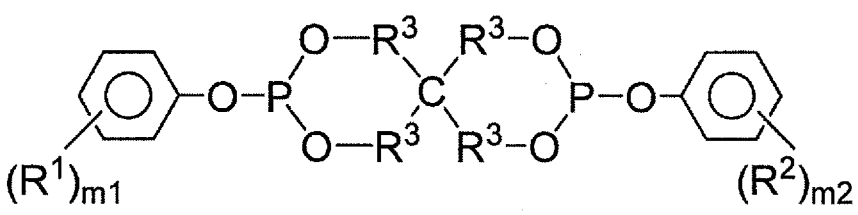

(I)

(wherein m1 and m2 are each independently an integer of 0 to 5;
$R^1$ and $R^2$ each independently represent an alkyl group having 1 to 12 carbon atoms, which may have a substituent; and
four $R^3$s each independently represent an alkylene group having 1 to 5 carbon atoms).

<2> The resin composition of <1>, wherein the resin composition further comprises carbon nanotubes in an amount of 0.5 to 15 parts by mass with respect to 100 parts by mass of a total amount of the polyarylate resin and the polycarbonate resin.

<3> The resin composition of <1> or <2>, wherein the phosphite ester compound is a compound represented by a general formula (I-1):

[Chem. 2]

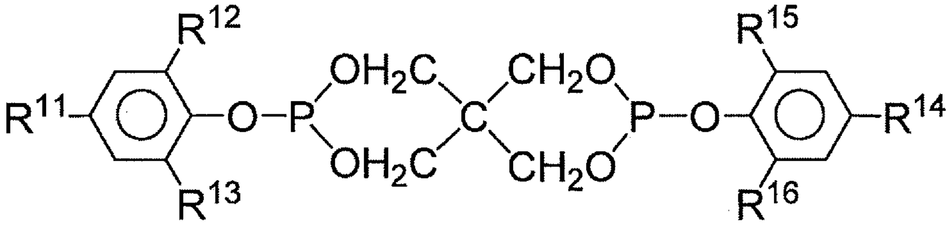

(I-1)

(wherein $R^{11}$ to $R^{16}$ are each independently a hydrogen atom or an alkyl group having 1 to 10 carbon atoms, which may have a substituent).

<4> The resin composition of any of <1> to <3>, wherein the resin composition further comprises a hindered phenol compound represented by a general formula (II) in an amount of 0.01 to 1 part by mass with respect to 100 parts by mass of a total amount of the polyarylate resin and the polycarbonate resin:

[Chem. 3]

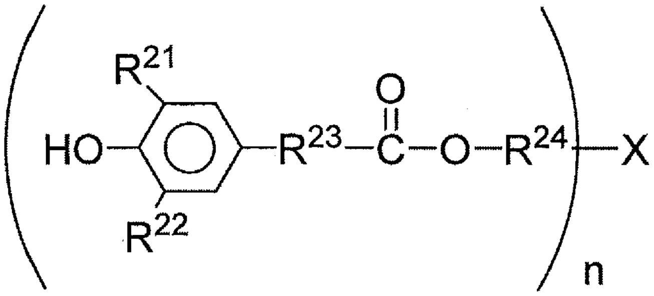

(II)

(wherein X represents a hydrocarbon group or an ether group;
n is an integer of 1 or more determined according to X;
$R^{21}$ and $R^{22}$ each independently represent a hydrogen atom or an alkyl group having 1 to 9 carbon atoms; and
$R^{23}$ and $R^{24}$ each independently represent an alkylene group having 1 to 5 carbon atoms).

<5> The resin composition of any of <1> to <4>, wherein the fluorine atom-containing polymer particles are unbaked fluorine atom-containing polymer particles.

<6> The resin composition of any of <1> to <5>, wherein the content of the silica particles is 4 to 50 parts by mass with respect to 100 parts by mass of a total amount of the polyarylate resin and the polycarbonate resin.

<7> The resin composition of any of <1> to <4>, wherein

the content of the silica particles is 8 to 62 parts by mass with respect to 100 parts by mass of a total amount of the polyarylate resin and the polycarbonate resin,
the silica particles have an average particle diameter of 2 to 12 μm, and
the fluorine atom-containing polymer particles are unbaked fluorine atom-containing polymer particles.

<8> The resin composition of <7>, wherein

the mass ratio of the polyarylate resin and the polycarbonate resin is 25/75 to 70/30,
the content of the silica particles is 8 to 50 parts by mass with respect to 100 parts by mass of a total amount of the polyarylate resin and the polycarbonate resin,
the silica particles have an average particle diameter of 2 to 8 μm,
the content of the phosphite ester compound is 0.03 to 0.5 parts by mass with respect to 100 parts by mass of a total amount of the polyarylate resin and the polycarbonate resin, and
in the phosphite ester compound, the m1 and the m2 are each independently an integer of 1 to 3, the $R^1$ and the $R^2$ each independently represent an alkyl group having 1 to 12 carbon atoms and no substituent, and the four $R^3$s each independently represent an alkylene group having 1 to 3 carbon atoms.

<9> The resin composition of any of <1> to <8>, wherein the fluorine atom-containing polymer is at least one kind of polymer selected from a group consisting of polytetrafluoroethylene, polyvinylidene fluoride, tetrafluoroethylene-perfluoromethyl vinyl ether copolymer, tetrafluoroethylene-hexafluoropropylene copolymer, and tetrafluoroethylene-ethylene copolymer.
<10> A molded product comprising the resin composition of any of <1> to <9>.
<11> The molded product of <10>, wherein the molded product is a camera module component.
<12> The molded product of <10>, wherein the molded product is a lens unit component.
<13> The molded product of <10>, wherein the molded product is an actuator component.

EFFECTS OF THE INVENTION

The resin composition of the present invention is excellent in molding stability.

The resin composition of the present invention can mold a molded product excellent in a dust-generating resistance property, heat-resisting properties, a dimensional stability, sliding properties, and external appearance properties.

A molded product molded from the resin composition of the present invention is also excellent in mechanical strength, particularly flexural strength.

BRIEF DESCRIPTION OF DRAWING

FIG. 1 is a view for illustrating a test piece produced in Examples, (A) is a perspective view of the test piece, and (B) is a front view and a side view of the test piece.

MODES FOR CARRYING OUT THE INVENTION

The resin composition of the present invention contains a polyarylate resin, a polycarbonate resin, silica particles, fluorine atom-containing polymer particles, and a phosphite ester compound.

The polyarylate resin used in the present invention is a resin comprising an aromatic dicarboxylic acid residue unit and a bisphenol residue unit.

A polyarylate raw material for introducing a bisphenol residue is a bisphenol. Specific examples of the bisphenols include, for example, 2,2-bis(4-hydroxyphenyl)propane (hereinafter referred to as "bisphenol A"), 2,2-bis(4- hydroxy-3,5-dimethylphenyl)propane, 2,2-bis(4-hydroxy-3,5-dibromophenyl)propane, 2,2-bis(4-hydroxy-3,5-dichlorophenyl)propane, 4,4'-dihydroxydiphenyl sulfone, 4,4'-dihydroxydiphenyl ether, 4,4'-dihydroxydiphenyl sulfide, 4,4'-dihydroxydiphenyl ketone, 4,4'-dihydroxydiphenylmethane, 1,1-bis(4-hydroxyphenyl)cyclohexane, and 1,1-bis(4-hydroxyphenyl)-3,3,5-trimethylcyclohexane. These compounds may be used alone or in combination of two or more thereof. In particular, bisphenol A is economically preferable.

Preferred examples of a raw material for introducing an aromatic dicarboxylic acid residue include terephthalic acid and isophthalic acid. In the present invention, a polyarylate resin composition obtained by mixing and using both is particularly preferable in terms of melt processability and mechanical properties. A mixing ratio thereof (terephthalic acid/isophthalic acid) can be optionally selected, and is preferably in the range of 90/10 to 10/90 in terms of molar fraction, more preferably 70/30 to 30/70, still more preferably 60/40 to 40/60, and optimally 50/50. When the molar fraction of the mixed terephthalic acid is less than 10 mol% or more than 90 mol%, it may be difficult to obtain a sufficient degree of polymerization in the case where polymerization is performed by an interfacial polymerization method.

The polycarbonate resin used in the present invention is a resin comprising a bisphenol residue unit and a carbonate residue unit.

Examples of the bisphenols as a raw material for introducing a bisphenol residue unit include, for example, bisphenol A, 2,2-bis(3,5-dibromo-4-hydroxyphenyl)propane, 2,2-bis(3,5-dimethyl-4-hydroxyphenyl)propane, 1,1-bis(4-hydroxyphenyl)cyclohexane, 1,1-bis(4-hydroxyphenyl)-3,3,5-trimethylcyclohexane, 1,1-bis(3,5-dimethyl-4-hydroxyphenyl)cyclohexane, 1,1-bis(4-hydroxyphenyl)decane, 1,4-bis(4-hydroxyphenyl)propane, 1,1-bis(4-hydroxyphenyl)cyclododecane, 4,4'-dihydroxydiphenyl ether, 4,4'-dithiodiphenol, 4,4'-dihydroxy-3,3'-dichlorodiphenyl ether, and 4,4'-dihydroxy-2,5-dihydroxydiphenyl ether. These may be used alone or in combination of two or more thereof.

As a precursor for introducing the carbonate residue unit, a carbonyl halide such as phosgene and a carbonate ester such as diphenyl carbonate can be used.

In the present invention, a resin comprising a polyarylate resin and a polycarbonate resin may be produced by melt-kneading a polyarylate resin a simple substance and a polycarbonate resin as a simple substance, or a copolymer of a polyarylate resin and a polycarbonate resin may be used.

The polymerization method of the polyarylate resin, the polymerization method of the polycarbonate resin, and the polymerization method of the copolymer resin of polyarylate and polycarbonate are not particularly limited by an interfacial polymerization method or a melt polymerization method as long as the object of the present invention is satisfied, and known methods may be used.

In the present invention, the resin comprising the polyarylate resin and the polycarbonate resin preferably has a limiting viscosity of 0.40 to 0.60. When the limiting viscosity exceeds 0.60, the melt viscosity increases, which makes injection molding difficult. When the limiting viscosity is less than 0.40, the resulting molded product tends to have insufficient impact strength. Each of the polyarylate resin and the polycarbonate resin preferably has a limiting viscosity within the above range.

The polyarylate resin and the polycarbonate resin are also commercially available.

A mass ratio of the polyarylate resin and the polycarbonate resin (polyarylate/polycarbonate) is 25/75 to 92/8, and is preferably 25/75 to 70/30, more preferably 25/75 to 50/50, and still more preferably 25/75 to 40/60, from the viewpoint of further improving a dust-generating resistance property, molding stability, sliding properties, and external appearance properties. When the ratio of the polyarylate resin is too small, the heat-resisting properties and the dimensional stability are deteriorated. When the ratio of the polyarylate resin is too high, the fluidity is poor, so that molding becomes difficult.

The dust-generating resistance property refers to a property of hardly causing falling off of a part of a molded product as fragments, dust, or the like at the time of assembling the molded product and of using the same. The dust-generating resistance property does not necessarily correlate with the sliding properties to be described later. For example, a molded product having an excellent dust-generating resistance property does not necessarily have excellent sliding properties. In contrast, for example, a molded product having excellent sliding properties does not necessarily have an excellent dust-generating resistance property.

The molding stability refers to a property of hardly reducing the molecular weight of the resin even by molding.

The sliding properties are properties relating to smoothness of a surface of a molded product, and mean, for example, that a smaller dynamic friction coefficient gives better smoothness.

The external appearance properties refer to properties of hardly floating fillers such as silica particles on a surface of a molded product, and when a molded product has black color, the surface of the molded product looks blacker.

The dimensional stability refers to a property of hardly changing the dimension of a molded product even under a severe environment.

Silica particles used in the present invention are not particularly limited as long as they are silica particles used as fillers in the field of plastics. As the silica particles, spherical silica is preferably used from the viewpoint of further improving the dust-generating resistance property. The "spherical" refers to a shape exhibiting a maximum diameter/minimum diameter of 1 to 1.3, and particularly 1 to 1.2 in a photomicrograph. When other inorganic fine particles, for example, titania particles or alumina particles are used instead of silica particles, dimensional stability is deteriorated.

A content of the silica particles is required to be 4 to 65 parts by mass with respect to 100 parts by mass of a total amount of the polyarylate resin and the polycarbonate resin, and is preferably in the range of 8 to 62 parts by mass, more preferably 8 to 50 parts by mass, still more preferably 8 to 40 parts by mass, and most preferably 8 to 30 parts by mass, from the viewpoint of further improving the dust-generating resistance property, the strength, the heat-resisting properties, the dimensional stability, the molding stability, the sliding properties, and the external appearance properties. When the content is less than 4 parts by mass, the dimensional stability of the resin composition becomes insufficient. When the content exceeds 65 parts by mass, an inconvenience is generated at the time of passing through a step upon production of the resin composition, such as pelletization by melt-kneading and extrusion becomes difficult. From the viewpoint of further improving the dust-generating resistance property alone, the content of the silica particles is preferably 4 to 50 parts by mass with respect to 100 parts by mass of a total amount of the polyarylate resin and the polycarbonate resin.

In the present invention, an average particle diameter of the silica particles to be incorporated in the resin composition is defined by a particle size value corresponding to a weight accumulation of 50% when a particle size distribution is measured using a particle size distribution measuring apparatus such as a laser diffraction/scattering particle size distribution meter. This measurement is performed, for example, after silica particles are added to water or alcohol so as to have a measurement allowable concentration to prepare a suspension, and the suspension is dispersed by an ultrasonic disperser.

As the average particle diameter of the silica particles to be incorporated in the resin composition of the present invention is smaller, when the silica particles fall off from the resin composition to become dust, the function of a product formed of the resin composition is less likely to be inhibited. On the other hand, when the average particle diameter of the silica particles is too small, the silica particles float on the surface of the molded product and appear white, so that the external appearance properties are deteriorated. Therefore, the average particle diameter of the silica particles is practically required to be 0.4 to 12 μm, particularly 0.5 to 10 μm, and is preferably 2 to 12 μm, more preferably 2 to 8 μm, and still more preferably 2 to 6 μm, from the viewpoint of further improving the dust-generating resistance property, the external appearance properties, and the molding stability. When the average particle diameter exceeds 12 μm, for example, in the case of using the resin composition of the present invention in a camera lens component, silica falling off from the resin composition may inhibit imaging as dust. When the average particle diameter of the silica particles exceeds 12 μm, the dimensional stability of a component using the resin composition of the present invention becomes

insufficient.

In the present invention, a method for producing the silica particles is not limited, and the silica particles can be produced by a known method. Examples thereof include a method in which a silica fine powder is put into high-temperature flame, melted, and fluidized, and when the fluidized silica becomes spherical utilizing surface tension, the spheres are rapidly cooled to produce silica particles. Alternatively, examples thereof include a method in which chemical flame is formed with an ignition burner in an atmosphere containing oxygen, a silicon powder is put into the chemical flame in such an amount that a dust cloud is formed, and explosion is caused to produce silica ultrafine particles; and a method in which alkoxysilane is hydrolyzed and aggregated under alkali to produce silica particles by a sol-gel method.

In order to improve adhesiveness between silica particles and a resin matrix, silica particles may be subjected to surface treatment with a silane coupling treating agent.

Silica particles are also commercially available.

In order to disperse the silica particles in the resin matrix, a dispersant may be used. As the dispersant, for example, a dispersant selected from the group consisting of fatty acid esters and derivatives thereof, fatty acid amides and derivatives thereof, and mixtures thereof can be used. Examples of the fatty acid amide include ethylene bishydroxystearic acid amide, ethylene bisstearic acid amide, and the like. By uniformly dispersing silica in the resin matrix, a mold shrinkage ratio and a linear expansion coefficient are decreased, and the dimensional stability is further improved. An addition amount of the dispersant is desirably 0.01 to 0.5 parts by mass with respect to 100 parts by mass of the resin composition of the present invention.

The fluorine atom-containing polymer particles used in the present invention are polymer particles containing a monomer containing a fluorine atom as a polymerization component. As a method of polymerizing the fluorine atom-containing polymer particles, either baking or unbaking may be used regardless of suspension or emulsification. By using the fluorine atom-containing polymer particles, all the properties including dust-generating resistance property, strength, heat-resisting properties, dimensional stability, molding stability, sliding properties, and external appearance properties first become good. The fluorine atom-containing polymer may be a polymer containing only a fluorine atom-containing monomer, or may be a copolymer of a fluorine atom-containing monomer and a fluorine atom-free monomer not containing a fluorine atom. The fluorine atom-containing polymer is preferably a polymer containing only a fluorine atom-containing monomer from the viewpoint of further improving the dust-generating resistance property and the sliding properties. Examples of the fluorine atom-containing monomer include tetrafluoroethylene, vinylidene fluoride, perfluoromethyl vinyl ether, hexafluoropropylene, and vinyl fluoride. Examples of the fluorine atom-free monomer include ethylene and propylene. A content ratio of the fluorine atom-containing monomer in the fluorine atom-containing polymer is usually 50 mol% or more, and from the viewpoint of further improving the dust-generating resistance property and the sliding properties, the content ratio is 70 mol% or more and 90 mol% or more.

Specific examples of the fluorine atom-containing polymer include polytetrafluoroethylene, polyvinylidene fluoride, tetrafluoroethylene-perfluoromethyl vinyl ether copolymer, tetrafluoroethylene-hexafluoropropylene copolymer, and tetrafluoroethylene-ethylene copolymer. In the present invention, polytetrafluoroethylene, and particularly low molecular weight polytetrafluoroethylene are preferable from the viewpoint of further improving the dust-generating resistance property, the strength, the heat-resisting properties, the dimensional stability, the molding stability, the sliding properties, and the external appearance properties. The low molecular weight polytetrafluoroethylene may contain a small amount of a copolymerization component (that is, a fluorine atom-free monomer). A content of the copolymerization component in the low molecular weight polytetrafluoroethylene is, for example, 2 mol% or less. The low molecular weight refers to a molecular weight as described later.

An average particle diameter of the fluorine atom-containing polymer particles used in the present invention is 0.5 to 20 $\mu$m, and is preferably 0.5 to 10 $\mu$m, more preferably 1 to 8 $\mu$m, still more preferably 2 to 6 $\mu$m, and particularly preferably 3 to 6 $\mu$m, from the viewpoint of further improving the dust-generating resistance property, the molding stability, and the sliding properties. When the average particle diameter of the fluorine atom-containing polymer is less than 0.5 $\mu$m, it may be difficult to impart the sliding properties to the resin composition, or the fluorine atom-containing polymer itself may cause dust generation. When the average particle diameter exceeds 20 $\mu$m, the molding stability is impaired.

The average particle diameter of the fluorine atom-containing polymer is an average particle diameter measured by a method in which a dispersion liquid dispersed in perchloroethylene is measured by a light transmission method. The average particle diameter of the fluorine atom-containing polymer is one in the resin composition, and the average particle diameter of the raw material used for producing the resin composition is usually maintained as it is even in the resin composition, and is also maintained in a molded product produced using the resin composition.

A molecular weight of the fluorine atom-containing polymer is not particularly limited, and is preferably low from the viewpoint of further improving the dust-generating resistance property, the molding stability, and the sliding properties. The low molecular weight refers to a molecular weight having a number average molecular weight of several thousands to several hundreds of thousands, and is, for example, preferably 1 million or less, and more preferably 600,000 or less.

As the molecular weight, a value measured by a differential scanning calorimeter (DSC method) is used.

A melting point of the fluorine atom-containing polymer is not particularly limited, and is preferably 320°C or

higher, and particularly preferably 325 to 335°C from the viewpoint of further improving the dust-generating resistance property, the molding stability, and the sliding properties.

As the melting point, a value measured by a differential scanning calorimeter (DSC method) is used.

The fluorine atom-containing polymer may be an unbaked product or a baked product. Baking refers to heating the fluorine atom-containing polymer to a temperature equal to or higher than the melting point thereof. The baked product is obtained by pulverizing after baking. By using the baked product, the dispersibility of the fluorine atom-containing polymer in the resin composition is improved. The fluorine atom-containing polymer is preferably an unbaked product from the viewpoint of further improving the dust-generating resistance property, the external appearance properties, and the sliding properties.

The fluorine atom-containing polymer is also commercially available or can be produced by a known method.

A content of the fluorine atom-containing polymer particles is 0.5 to 12 parts by mass with respect to 100 parts by mass of a total amount of the polyarylate resin and the polycarbonate resin, and is preferably 1.5 to 12 parts by mass, more preferably 2 to 12 parts by mass, still more preferably 2 to 8 parts by mass, and most preferably 3 to 6 parts by mass, from the viewpoint of further improving the dust-generating resistance property, the molding stability, and the sliding properties. When the content is too small, the sliding properties and a dust-generating property are deteriorated, and when the content is too large, the molding stability is impaired. The fluorine atom-containing polymer may contain two or more kinds of fluorine atom-containing polymers having different monomer compositions, molecular weights, melting points, and/or the like. In that case, a total content thereof may be within the above range.

In the present invention, a phosphite ester compound represented by a general formula (I) is used. By using the phosphite ester compound, all the properties including dust-generating resistance property, strength, heat-resisting properties, dimensional stability, molding stability, sliding properties, and external appearance properties first become good. When, instead of the phosphite ester compound represented by the general formula (I), a phosphite ester compound not included in the phosphite ester compound is used, the molding stability and the dust-generating resistance property are deteriorated.

[Chem. 4]

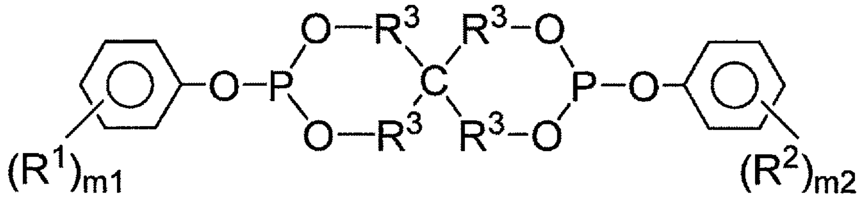

(I)

In the formula (I), m1 and m2 are each independently an integer of 0 to 5, and particularly, from the viewpoint of further improving the dust-generating resistance property, the strength, the heat-resisting properties, the dimensional stability, the molding stability, the sliding properties, and the external appearance properties, are preferably an integer of 1 to 5, and more preferably 1 to 3.

$R^1$ and $R^2$ each independently represent an alkyl group having 1 to 12, preferably 1 to 10, more preferably 1 to 9, and still more preferably 1 to 5 carbon atoms. Examples of the alkyl group include a methyl group, an ethyl group, a n-propyl group, an isopropyl group, a n-butyl group, an isobutyl group, a sec-butyl group, a tert-butyl group, a pentyl group, a hexyl group, a heptyl group, an octyl group, a nonyl group, a decyl group, an undecyl group, and a lauryl group. In $R^1$ and $R^2$, the alkyl group may have a substituent. Examples of the substituent of the alkyl group in $R^1$ and $R^2$ include an aryl group such as a phenyl group and a naphthyl (preferably a phenyl group); and a halogen atom such as a fluorine atom, a chlorine atom, and a bromine atom (preferably, a fluorine atom or a chlorine atom). A preferred substituent is an aryl group, and particularly a phenyl group. In $R^1$ and $R^2$, when the alkyl group has a substituent, the number of carbon atoms of the alkyl group does not include the number of carbon atoms of the substituent. Specific examples of the alkyl group having a substituent in $R^1$ and $R^2$ include a benzyl group, a phenethyl group, an $\alpha$-methylbenzyl group, an $\alpha,\alpha$-dimethylbenzyl group (= cumyl group), a diphenylmethyl group, a triphenylmethyl group, a mononaphthylmethyl group, a monofluoromethyl group, and a monochloromethyl group. Two or more $R^1$s may be independently selected. Two or more $R^2$s may be independently selected. $R^1$ and $R^2$ are each preferably an alkyl group having no substituent from the viewpoint of further improving the dust-generating resistance property, the strength, the heat-resisting properties, the dimensional stability, the molding stability, the sliding properties, and the external appearance properties.

Four $R^3$s each independently represent an alkylene group having 1 to 5 carbon atoms. Four $R^3$s each independently preferably represent an alkylene group having 1 to 3 carbon atoms from the viewpoint of further improving the dust-generating resistance property, the strength, the heat-resisting properties, the dimensional stability, the molding stability, the sliding properties, and the external appearance properties. Examples of a preferred alkylene group in $R^3$

include a methylene group, a dimethylene group, and a triethylene group. Most preferred four $R^3$s are each independently a methylene group or a dimethylene group, and particularly a methylene group simultaneously.

Among the phosphite ester compounds represented by the above-mentioned general formula (I), a phosphite ester compound which is preferable from the viewpoint of the dust-generating resistance property, the heat-resisting properties, the dimensional stability, the external appearance properties, the molding stability, and the strength is a phosphite ester compound represented by a general formula (I-1).

[Chem. 5]

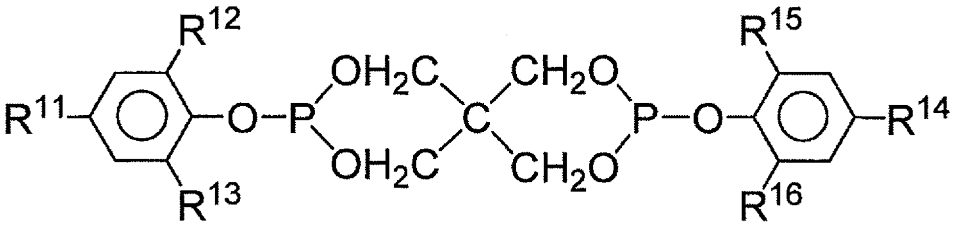

(I-1)

In the formula (I-1), $R^{11}$ and $R^{14}$ are each independently a hydrogen atom or an alkyl group having 1 to 10 carbon atoms. $R^{11}$ and $R^{14}$ each independently preferably represent an alkyl group having 1 to 5 carbon atoms, and more preferably 1 to 4 carbon atoms, from the viewpoint of further improving the dust-generating resistance property, the strength, the heat-resisting properties, the dimensional stability, the molding stability, the sliding properties, and the external appearance properties. Specific examples of the alkyl group in $R^{11}$ and $R^{14}$ include an alkyl group having a predetermined number of carbon atoms, among the same specific examples as those of the alkyl group in $R^1$ and $R^2$. In $R^{11}$ and $R^{14}$, the alkyl group may have a substituent. Examples of the substituent of the alkyl group in $R^{11}$ and $R^{14}$ include the same substituents as the substituents which the alkyl group in $R^1$ and $R^2$ may have. A preferred substituent of the alkyl group in $R^{11}$ and $R^{14}$ is an aryl group, and particularly a phenyl group. In $R^{11}$ and $R^{14}$, when the alkyl group has a substituent, the number of carbon atoms of the alkyl group does not include the number of carbon atoms of the substituent. Specific examples of the alkyl group having a substituent in $R^{11}$ and $R^{14}$ include the same specific examples as those of the alkyl group having a substituent in $R^1$ and $R^2$. Examples of a more preferred alkyl group in $R^{11}$ and $R^{14}$ include a methyl group, an ethyl group, a n-propyl group, an isopropyl group, a n-butyl group, an isobutyl group, a sec-butyl group, a tert-butyl group, a benzyl group, a phenethyl group, an $\alpha$-methylbenzyl group, an $\alpha,\alpha$-dimethylbenzyl group, and a diphenylmethyl group. Still more preferred $R^{11}$ and $R^{14}$ are each independently or simultaneously a methyl group, an ethyl group, a n-propyl group, an isopropyl group, a n-butyl group, an isobutyl group, a sec-butyl group, a tert-butyl group, a benzyl group, a phenethyl group, an $\alpha$-methylbenzyl group, an $\alpha,\alpha$-dimethylbenzyl group, or a diphenylmethyl group, and particularly preferable is a methyl group or an $\alpha,\alpha$-dimethylbenzyl group. From the viewpoint of further improving the dust-generating resistance property, the strength, the heat-resisting properties, the dimensional stability, the molding stability, the sliding properties, and the external appearance properties, in $R^{11}$ and $R^{14}$, an alkyl group preferably does not have a substituent, most preferred $R^{11}$ and $R^{14}$ are the same group, and particularly a methyl group simultaneously.

$R^{12}$ and $R^{15}$ are each independently a hydrogen atom or an alkyl group having 1 to 10 carbon atoms. $R^{12}$ and $R^{15}$ each independently preferably represent an alkyl group having 1 to 5 carbon atoms, more preferably 2 to 5 carbon atoms, and still more preferably 3 to 5 carbon atoms, from the viewpoint of further improving the dust-generating resistance property, the strength, the heat-resisting properties, the dimensional stability, the molding stability, the sliding properties, and the external appearance properties. Specific examples of the alkyl group in $R^{12}$ and $R^{15}$ include an alkyl group having a predetermined number of carbon atoms, among the same specific examples as those of the alkyl group in $R^1$ and $R^2$. In $R^{12}$ and $R^{15}$, the alkyl group may have a substituent. Examples of the substituent of the alkyl group in $R^{12}$ and $R^{15}$ include the same substituents as the substituents which the alkyl group in $R^1$ and $R^2$ may have. A preferred substituent of the alkyl group in $R^{12}$ and $R^{15}$ is an aryl group, and particularly a phenyl group. In $R^{12}$ and $R^{15}$, when the alkyl group has a substituent, the number of carbon atoms of the alkyl group does not include the number of carbon atoms of the substituent. Specific examples of the alkyl group having a substituent in $R^{12}$ and $R^{15}$ include the same specific examples as those of the alkyl group having a substituent in $R^1$ and $R^2$. Examples of a more preferred alkyl group in $R^{12}$ and $R^{15}$ include an ethyl group, a n-propyl group, an isopropyl group, a n-butyl group, an isobutyl group, a sec-butyl group, a tert-butyl group, a pentyl group, a phenethyl group, an $\alpha$-methylbenzyl group, and an $\alpha,\alpha$-dimethylbenzyl group. Still more preferred $R^{12}$ and $R^{15}$ are each independently or simultaneously an ethyl group, a n-propyl group, an isopropyl group, a n-butyl group, an isobutyl group, a sec-butyl group, a tert-butyl group, a pentyl group, a benzyl group, a phenethyl group, an $\alpha$-methylbenzyl group, or an $\alpha,\alpha$-dimethylbenzyl group, and particularly preferable

is a tert-butyl group or an α,α-dimethylbenzyl group. From the viewpoint of further improving the dust-generating resistance property, the strength, the heat-resisting properties, the dimensional stability, the molding stability, the sliding properties, and the external appearance properties, in $R^{12}$ and $R^{15}$, an alkyl group preferably does not have a substituent, most preferred $R^{12}$ and $R^{15}$ are the same group, and particularly a tert-butyl group simultaneously.

$R^{13}$ and $R^{16}$ are each independently a hydrogen atom or an alkyl group having 1 to 10 carbon atoms. $R^{13}$ and $R^{16}$ each independently preferably represent a hydrogen atom or an alkyl group having 1 to 5 carbon atoms, and more preferably an alkyl group having 3 to 5 carbon atoms, from the viewpoint of further improving the dust-generating resistance property, the strength, the heat-resisting properties, the dimensional stability, the molding stability, the sliding properties, and the external appearance properties. Specific examples of the alkyl group in $R^{13}$ and $R^{16}$ include an alkyl group having a predetermined number of carbon atoms, among the same specific examples as those of the alkyl group in $R^1$ and $R^2$. In $R^{13}$ and $R^{16}$, the alkyl group may have a substituent. Examples of the substituent of the alkyl group in $R^{13}$ and $R^{16}$ include the same substituents as the substituents which the alkyl group in $R^1$ and $R^2$ may have. A preferred substituent of the alkyl group in $R^{13}$ and $R^{16}$ is an aryl group, and particularly a phenyl group. In $R^{13}$ and $R^{16}$, when the alkyl group has a substituent, the number of carbon atoms of the alkyl group does not include the number of carbon atoms of the substituent. Specific examples of the alkyl group having a substituent in $R^{13}$ and $R^{16}$ include the same specific examples as those of the alkyl group having a substituent in $R^1$ and $R^2$. Examples of a more preferred alkyl group in $R^{13}$ and $R^{16}$ include a n-propyl group, an isopropyl group, a n-butyl group, an isobutyl group, a sec-butyl group, a tert-butyl group, and a pentyl group. Still more preferred $R^{13}$ and $R^{16}$ are each independently or simultaneously a hydrogen atom, a n-propyl group, an isopropyl group, a n-butyl group, an isobutyl group, a sec-butyl group, a tert-butyl group, or a pentyl group, and particularly preferable is a hydrogen atom or a tert-butyl group. From the viewpoint of further improving the dust-generating resistance property, the strength, the heat-resisting properties, the dimensional stability, the molding stability, the sliding properties, and the external appearance properties, in $R^{13}$ and $R^{16}$, an alkyl group preferably does not have a substituent, most preferred $R^{13}$ and $R^{16}$ are the same group, and particularly a tert-butyl group simultaneously.

Specific examples of the phosphite ester compound represented by the general formula (I) include the following compounds:

Compound (I-1-1): bis(2,6-di-t-butyl-4-methylphenyl)pentaerythritol-diphosphite; in the general formula (I-1), $R^{11}$ = $R^{14}$ = methyl group, $R^{12}$ = $R^{15}$ = tert-butyl group, $R^{13}$ = $R^{16}$ = tert-butyl group;
Compound (I-1-2): bis(2,6-di-t-butyl-4-ethylphenyl)pentaerythritol-diphosphite; in the general formula (I-1), $R^{11}$ = $R^{14}$ = ethyl group, $R^{12}$ = $R^{15}$ = tert-butyl group, $R^{13}$ = $R^{16}$ = tert-butyl group;
Compound (I-1-3): bis(2,4,6-tri-t-butylphenyl)spiropentaerythritol-diphosphite; in the general formula (I-1), $R^{11}$ = $R^{14}$ = tert-butyl group, $R^{12}$ = $R^{15}$ = tert-butyl group, $R^{13}$ = $R^{16}$ = tert-butyl group;
Compound (1-1-4): bis(nonylphenyl)pentaerythritol diphosphite; in the general formula (I), m1 = m2 = 1, $R^1$ = $R^2$ = nonyl group, $R^3$ = methylene group;
Compound (I-1-5): bis(2,4-di-t-butylphenyl)pentaerythritol diphosphite; in the general formula (I-1), $R^{11}$ = $R^{14}$ = tert-butyl group, $R^{12}$ = $R^{15}$ = tert-butyl group, $R^{13}$ = $R^{16}$ = hydrogen atom; and
Compound (1-1-6): bis(2,4-dicumylphenyl)pentaerythritol diphosphite; in the general formula (I-1), $R^{11}$ = $R^{14}$ = α,α-dimethylbenzyl group, $R^{12}$ = $R^{15}$ = α,α-dimethylbenzyl group, $R^{13}$ = $R^{16}$ = hydrogen atom.

From the viewpoint of further improving the molding stability and the dust-generating resistance property, the phosphite ester compound is more preferably the compound (1-1-1) and/or the compound (1-1-6), and still more preferably the compound (1-1-1)).

The phosphite ester compound represented by the general formula (I) is also commercially available or can be synthesized by a known method.

The compound (I-1-1) is available, for example, as commercially available "PEP-36" made by ADEKA CORPORATION.

The compound (I-1-6) is available, for example, as commercially available "Doverphos S-9228PC" made by Dover Chemical Corporation.

A content of the phosphite ester compound represented by the general formula (I) is 0.008 to 1.2 parts by mass, and particularly 0.01 to 1 part by mass, with respect to 100 parts by mass of a total amount of the polyarylate resin and the polycarbonate resin, and is preferably 0.02 to 0.5 parts by mass, more preferably 0.03 to 0.5 parts by mass, and still more preferably 0.03 to 0.1 parts by mass, from the viewpoint of further improving the dust-generating resistance property, the strength, the heat-resisting properties, the dimensional stability, the molding stability, the sliding properties, and the external appearance properties. When the content is too small or too large, the molding stability and the dust-generating resistance property are deteriorated.

Two or more kinds of the phosphite ester compounds represented by the general formula (I) may be used in combination, and in that case, a total amount thereof may be within the above range. Furthermore, the composition of

the present invention may contain a phosphorus compound generated by decomposition (hydrolysis, thermal decomposition, or the like) of a phosphite ester.

The resin composition of the present invention preferably further contains a hindered phenol compound represented by a general formula (II). By containing such a hindered phenol compound, the molding stability and the dust-generating resistance property can be improved even more.

[Chem. 6]

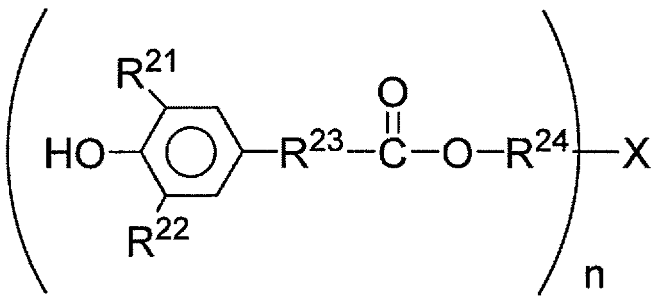

(II)

In the formula (II), X represents a hydrocarbon group or an ether group.

The hydrocarbon group is a monovalent or tetravalent hydrocarbon group having 1 to 20 carbon atoms.

Examples of the monovalent hydrocarbon group include alkyl groups having 10 to 20, preferably 15 to 20, and more preferably 16 to 18 carbon atoms. Examples of such alkyl group include, for example, a decyl group, a undecyl group, a lauryl group, a tridecyl group, a myristyl group, a pentadecyl group, a cetyl group, a heptadecyl group, a stearyl group, a nonadecyl group, and an eicosyl group.

Examples of the tetravalent hydrocarbon group include a saturated hydrocarbon group having 1 to 2 carbon atoms, preferably a carbon atom.

The ether group is a divalent group, specifically "-O-".

Preferred X is a hydrocarbon group, particularly a monovalent or tetravalent hydrocarbon group.

n is an integer of 1 or more, particularly 1 to 4, determined according to the valence of X. When X is monovalent, n is 1. When X is divalent, n is 2. When X is trivalent, n is 3. When X is tetravalent, n is 4.

$R^{21}$ and $R^{22}$ are each independently a hydrogen atom or an alkyl group having 1 to 9 carbon atoms. $R^{21}$ and $R^{22}$ each independently preferably represent an alkyl group having 1 to 5, and more preferably 3 to 5 carbon atoms. Examples of a more preferred alkyl group in $R^{21}$ and $R^{22}$ include a n-propyl group, an isopropyl group, a n-butyl group, an isobutyl group, a sec-butyl group, a tert-butyl group, and a pentyl group. Most preferred $R^{21}$ and $R^{22}$ are the same group, and particularly a tert-butyl group simultaneously.

$R^{23}$ and $R^{24}$ each independently represent an alkylene group having 1 to 5 carbon atoms. $R^{23}$ and $R^{24}$ each independently preferably represent an alkylene group having 1 to 3 carbon atoms. Examples of a preferred alkylene group in $R^{23}$ and $R^{24}$ include a methylene group, a dimethylene group, and a triethylene group. Most preferred $R^{23}$ and $R^{24}$ are each independently a methylene group or a dimethylene group, and particularly a dimethylene group and a methylene group, respectively.

Among the hindered phenol compounds represented by the above-mentioned general formula (II), a hindered phenol compound which is preferable from the viewpoint of further improving the molding stability and the dust-generating resistance property is a hindered phenol compound represented by general formulas (II-1) and (II-2), and particularly a hindered phenol compound represented by the general formula (II-1).

[Chem. 7]

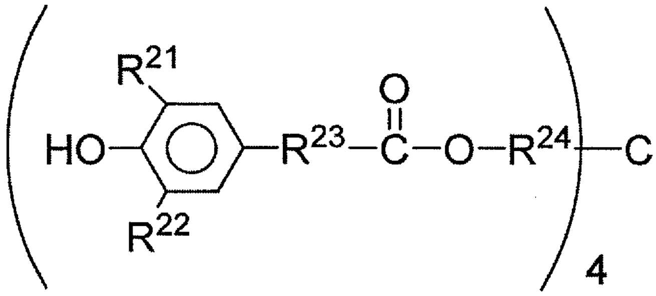

(II-1)

In the formula (II-1), $R^{21}$ and $R^{22}$ are the same as $R^{21}$ and $R^{22}$ in the formula (II), respectively.
In the formula (II-1), $R^{23}$ and $R^{24}$ are the same as $R^{23}$ and $R^{24}$ in the formula (II), respectively.

[Chem. 8]

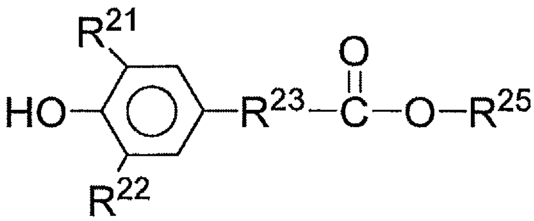

(II-2)

In the formula (II-2), $R^{21}$ and $R^{22}$ are the same as $R^{21}$ and $R^{22}$ in the formula (II), respectively.
In the formula (II-2), $R^{23}$ is the same as $R^{23}$ in the formula (II).
In the formula (II-2), examples of $R^{25}$ include alkyl groups having 11 to 25, preferably 16 to 23, and more preferably 16 to 20 carbon atoms. Examples of a more preferred alkyl group include a cetyl group, a heptadecyl group, a stearyl group (= octadecyl group), a nonadecyl group, and an eicosyl group.
Specific examples of the hindered phenol compound represented by the general formula (II) include the following compounds:

Compound (II-1-1): pentaerythritol tetrakis[3-(3,5-di-t-butyl-4-hydroxyphenyl) propionate; in the general formula (II-1), $R^{21}$ = $R^{22}$ = tert-butyl group, $R^{23}$ = dimethylene group, $R^{24}$ = methylene group; and
Compound (II-2-1): octadecyl-3-(3,5-di-t-butyl-4-hydroxyphenyl) propionate; in the general formula (II-2), $R^{21}$ = $R^{22}$ = tert-butyl group, $R^{23}$ = dimethylene group, $R^{25}$ = octadecyl group.

From the viewpoint of further improving the molding stability and the dust-generating resistance property, the hindered phenol compound is more preferably the hindered phenol compound represented by the general formula (II-1), and particularly the compound (II-1-1).
The hindered phenol compound represented by the general formula (II) is also commercially available or can be synthesized by a known method.
The compound (II-1-1) is available, for example, as commercially available Irganox 1010 made by BASF SE.
The compound (II-2-1) is available, for example, as commercially available Irganox 1076 made by BASF SE.
A content of the hindered phenol compound represented by the general formula (II) is 0.01 to 1 part by mass with respect to 100 parts by mass of a total amount of the polyarylate resin and the polycarbonate resin, and is preferably 0.02 to 0.5 parts by mass, and more preferably 0.02 to 0.1 parts by mass, from the viewpoint of further improving the molding stability and the dust-generating resistance property.
Two or more kinds of the hindered phenol compounds represented by the general formula (II) may be used in combination, and in that case, a total amount thereof may be within the above range.
The resin composition of the present invention may further contain carbon nanotubes from the viewpoint of improving antistatic performance. The carbon nanotube is not particularly limited, and has a shape in which a graphite layer is rolled up to be cylindrical, and may be, for example, a single-walled carbon nanotube having a structure in which

one graphite layer is rolled up, or a multi-walled carbon nanotube in which two or more graphite layers are rolled up. The carbon nanotube is preferably a multi-walled carbon nanotube. The containing of the carbon nanotubes in the resin composition leads to reduction of a surface resistivity of the resin composition, which makes it possible to prevent a molded body using the resin composition from being charged with static electricity and also to prevent adhesion of dust due to static electricity. The antistatic performance is not necessarily a property that the resin composition of the present invention should have, but is a property that the resin composition of the present invention may not have, and is a property that the resin composition of the present invention preferably has.

The carbon nanotubes of the present invention can be generally produced by a laser ablation method, an arc discharge method, a thermal CVD method, a plasma CVD method, a combustion method, or the like, but the carbon nanotubes may be produced by any method. In particular, carbon nanotubes obtained by a method of preparation using zeolite as a carrier of a catalyst and acetylene as a raw material by a thermal CVD method are preferable as carbon nanotubes to be used in the present invention in that they are high-purity and well-graphitized multi-walled carbon nanotubes without being particularly purified although having amorphous carbon coating due to some thermal decomposition.

The carbon nanotubes used in the present invention preferably have an average length of 5 to 100 μm, and more preferably 10 to 80 μm. In addition, the carbon nanotubes preferably have a diameter of 1 to 200 nm, and more preferably 3.5 to 150 nm.

A content of the carbon nanotubes is preferably 0.5 to 15 parts by mass, more preferably 1 to 10 parts by mass, still more preferably 2 to 8 parts by mass, and particularly preferably 3 to 6 parts by mass, with respect to 100 parts by mass of a total amount of the polyarylate resin and the polycarbonate resin. When the content of the carbon nanotubes is less than 0.1 parts by mass, it may be insufficient to sufficiently reduce the surface resistivity, and when the content exceeds 10 parts by mass, the effect of reducing the surface resistivity has already reached saturation, and the molding stability may become insufficient.

In addition to the above components, a release agent, a pigment, a dye, a weather-resistant agent, an antioxidant, a heat stabilizer, a flame retardant, an antistatic agent, an impact modifier, a sliding agent such as ultrahigh molecular weight polyethylene, and the like can be added to the resin composition of the present invention as long as the properties of the resin composition of the present invention are not impaired. The resin composition of the present invention preferably contains a release agent. Examples of the release agent include a fatty acid ester of a saturated aliphatic polyol.

A method of producing the resin composition of the present invention is not particularly limited as long as each component is uniformly dispersed in the resin composition. Examples thereof include a method in which a polyarylate resin, a polycarbonate resin, silica particles, fluorine atom-containing polymer particles, a phosphite ester compound, and other additives are uniformly blended using a tumbler or a Henschel mixer, and then melt-kneaded to be pelletized.

A method of molding the resin composition of the present invention is not particularly limited, and examples thereof include an injection molding method, an extrusion molding method, a blow molding method, and a sintering molding method. Among them, an injection molding method is preferable because the effect of improving mechanical properties and moldability is high. An injection molding machine used for injection molding is not particularly limited, and examples thereof include a screw in-line type injection molding machine and a plunger type injection molding machine. A resin composition heat-melted in a cylinder of the injection molding machine is weighed every shot, injected into a die in a molten state, cooled and solidified in a predetermined shape, and then taken out as a molded product from the die.

The molded product of the present invention can be produced by molding using the above-mentioned resin composition having a pellet shape. The molded product of the present invention may also be produced by kneading silica particles with the polyarylate resin and/or the polycarbonate resin in advance, and then further kneading the kneaded product with the remaining necessary components, followed by molding. The molded product of the present invention may also be produced by dry-blending the polyarylate resin, the polycarbonate resin, silica particles, fluorine atom-containing polymer particles, and the phosphite ester compound, and directly molding the dryblended product without being pelletized.

The resin composition of the present invention is excellent in molding stability. For example, when the resin composition (pellet) of the present invention is injection-molded at a resin temperature of 340°C and a molding cycle of 900 seconds to prepare a test piece shown in FIG. 1, a drop rate of the limiting viscosity of the molded product based on the limiting viscosity of the pellet is usually less than 10%, preferably less than 7%, and more preferably less than 4%. A detailed measurement method will be shown in Examples. FIG. 1 is a view for illustrating a test piece, (A) is a perspective view of the test piece, and (B) is a front view and a side view of the test piece. A unit of the dimension in FIG. 1 is "mm".

The molded product of the present invention is excellent in strength. For example, when the resin composition of the present invention is injection-molded at a resin temperature of 340°C and a molding cycle of 30 seconds to prepare a dumbbell test piece, and the flexural strength of the test piece is measured in accordance with JIS K 7171, the flexural strength is usually 82 MPa or more, preferably 92 MPa or more, and more preferably 102 MPa or more. A detailed

measurement method will be shown in Examples.

The molded product of the present invention is excellent in heat-resisting properties. For example, when the resin composition of the present invention is injection-molded at a resin temperature of 340°C and a molding cycle of 30 seconds to prepare a dumbbell test piece, and a temperature of deflection under load is measured at a load of 1.8 MPa in accordance with JIS K 7191-1 and K 7191-2, the temperature of deflection under load is usually 148°C or higher, preferably 150°C or higher, and more preferably 152°C or higher. A detailed measurement method will be shown in Examples.

The molded product of the present invention is excellent in dimensional stability. For example, when the resin composition of the present invention is injection-molded at a resin temperature of 340°C and a molding cycle of 30 seconds to prepare a ring-shaped molded product, and retention under a low temperature environment and retention under a high temperature environment are repeated, a rate of change in an inner diameter thereof is usually within a range of ±0.10, preferably within a range of ±0.08, and more preferably within a range of ±0.06. A detailed measurement method will be shown in Examples.

The molded product of the present invention is excellent in dust-generating resistance property. For example, the resin composition of the present invention is injection-molded at a resin temperature of 340°C and a molding cycle of 30 seconds to prepare a test piece shown in FIG. 1, 100 test pieces are placed into a container, and vibration at 300 times/min is given thereto for 24 hours. At this time, a dust generation rate of the molded product is usually less than 0.10%, preferably less than 0.07%, and more preferably less than 0.04%. A detailed measurement method will be shown in Examples.

The molded product of the present invention is excellent in external appearance properties. For example, when the resin composition of the present invention is injection-molded at a resin temperature of 340°C and a molding cycle of 30 seconds to prepare a test piece shown in FIG. 1, and the surface appearance is visually observed, the surface is usually smooth, preferably smooth and does not appear white, and more preferably, there is no floating of silica particles, and the surface is smooth and does not appear white. A detailed evaluation method will be shown in Examples.

The molded product of the present invention is excellent in sliding properties. For example, when the resin composition of the present invention is injection-molded at a resin temperature of 340°C and a molding cycle of 30 seconds to prepare a plate-shaped molded product, and a sliding partner material is rotated with respect to the plate-shaped molded product in accordance with JIS K7218 A method, the dynamic friction coefficient is usually 0.30 or less, preferably 0.27 or less, and more preferably 0.23 or less. A detailed measurement method will be shown in Examples.

The molded product of the present invention is preferably excellent in antistatic performance. For example, when the resin composition of the present invention is injection-molded at a resin temperature of 340°C and a molding cycle of 30 seconds to prepare a molded product, the surface resistivity is preferably $10^{11}$ Ω or less, more preferably $10^{10}$ Ω or less, and still more preferably $10^{9}$ Ω or less. A detailed measurement method will be shown in Examples.

Since a molded product produced from the resin composition of the present invention has excellent dust-generating resistance property, the resin composition of the present invention is useful for production (molding) of a product in which dust generation is likely to be a problem, for example, a molded product such as a camera module component, a lens unit component, and an actuator component.

The camera module component is a resin component constituting an electronic component having a camera function mounted in a mobile phone, a game machine, a personal computer, an in-vehicle camera, a mobile phone terminal, or the like.

The lens unit component is a resin component constituting a lens unit of an electronic component having a camera function mounted in a mobile phone, a game machine, a personal computer, an in-vehicle camera, a mobile phone terminal, or the like. The lens unit component is one of the constituent components of the camera module component.

The actuator component is a resin component constituting an actuator that controls movement or mechanical action in a mobile phone, a game machine, a personal computer, an in-vehicle camera, a mobile phone terminal, or the like. The actuator component is one of the constituent components of the camera module component.

## EXAMPLES

The present invention will be hereinafter specifically described with reference to Examples and Comparative Examples.

### 1. Raw materials

- Polyarylate resin; "U-powder" made by Unitika Ltd. (limiting viscosity 0.54):

- Polycarbonate resin; "SD POLYCA 200-13" made by Sumika Polycarbonate Ltd. (limiting viscosity 0.50):
- Silica 0.3; spherical silica, "SFP-20M" made by Denka Company Limited (average particle diameter 0.3 μm):
- Silica 0.5; spherical silica, "SC2500-SXJ" made by ADMATECHS Co., Ltd. (average particle diameter 0.5 μm):
- Silica 5.0; spherical silica, "FB-5SDC" made by Denka Company Limited (average particle diameter 5 μm):
- Silica 10; spherical silica, "FB-12D" made by Denka Company Limited (average particle diameter 10 μm):
- Silica 15; spherical silica, "FB-945" made by Denka Company Limited (average particle diameter 15 μm):
- Alumina 3.0; spherical alumina, "DAW-03" made by Denka Company Limited (average particle diameter 3 μm):
- Polytetrafluoroethylene particles 2.0: "LUBRON L-2" made by DAIKIN CORPORATION (average particle diameter 2 μm) (unbaked product):
- Polytetrafluoroethylene particles 5.0: "LUBRON L-5" made by DAIKIN CORPORATION (average particle diameter 5 μm) (unbaked product):
- Polytetrafluoroethylene particles 30: "Fluon L169J-S" made by AGC Inc. (average particle diameter 30 μm) (unbaked product):
- Baked polytetrafluoroethylene particles 4.5: "KTL-8N" made by Kitamura Limited (average particle diameter 4.5 μm):
- Multi-walled carbon nanotube; "K-NANOS-100T" made by Kumho Petrochemical Co., Ltd. (average length: 26 μm, diameter: 8 to 15 nm):
- Phosphite ester compound; "PEP-36" made by ADEKA CORPORATION; the above-mentioned compound (1-1-1):
- Phosphite ester compound; "Doverphos S-9228PC" made by Dover Chemical Corporation; the above-mentioned compound (I-1-6):
- Phosphite ester compound; "PEP-8" made by ADEKA CORPORATION; represented by the following chemical formula:

[Chem. 9]

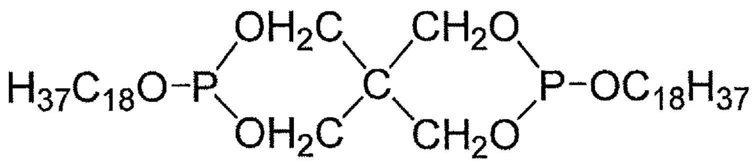

- Hindered phenol compound: "Irganox 1010" made by BASF SE; the above-mentioned compound (II-1-1):

- Release agent; "VPG-861" made by Emery Oleochemicals GmbH; fatty acid ester of saturated aliphatic polyol:
  - Pigment; carbon black.

2. Evaluation Methods

(1) Flexural strength

A resin composition was molded at a resin temperature of 340°C and a molding cycle of 30 seconds using an injection molding machine (made by TOSHIBA MACHINE CO., LTD., model number: EC100N II) to prepare a dumbbell test piece. Using the obtained test piece, measurement was performed in accordance with JIS K 7171. The strength was evaluated based on the flexural strength S by the following method.

⊙; 102 MPa ≤ S;
○; 92 MPa ≤ S < 102 MPa;
△; 82 MPa ≤ S < 92 MPa; (no problem in practical use) and
×; S < 82 MPa.

(2) DTUL (Temperature of deflection under load) (heat-resisting properties)

Using the test piece obtained in (1), measurement was performed at a load of 1.8 MPa in accordance with JIS K 7191-1 and K 7191-2. From the viewpoint of required heat resistance at the time of soldering, when the temperature of deflection under load is 148 °C or higher, it is within a practically acceptable range. The heat-resisting properties were evaluated based on the temperature of deflection under load by the following method.

⊙; 152°C or higher;
○: 150°C or higher and lower than 152°C;
△: 148°C or higher and lower than 150°C; (no problem in practical use) and
×; Lower than 148°C

(3) Dimensional stability

Using the resin composition, a ring-shaped molded product having an outer diameter of 30 mm, an inner diameter of 26 mm, and a thickness of 2 mm was molded by injection molding (one side gate) at a resin temperature of 340°C and a molding cycle of 30 seconds. Thereafter, the inner diameter size was measured at multiple points with a high-precision two-dimensional measuring device (made by KEYENCE CORPORATION, model number: UM-8400) to determine an average inner diameter. Then, "-40°C × 1 hour" → "80°C × 1 hour" was defined as 1 cycle, and treatment was performed at a total of 30 cycles to determine a rate of change in the average inner diameter. Regarding this numerical value, a smaller value gave better dimensional stability, and when the value was within a range of ±0.10, it was determined that there was no practical problem in the dimensional stability. The dimensional stability was evaluated based on the rate of change by the following method.

⊙; ±0.06;
○; ±0.08;
△; ±0.10; (no practical problem) and
×; Less than -0.1 or more than +0.1.

(4) Molding stability

A resin composition was molded at a resin temperature of 340°C and a molding cycle of 900 seconds using an injection molding machine (J35AD made by The Japan Steel Works, Ltd.) to prepare a test piece as shown in FIG. 1, and a drop rate of the limiting viscosity of the molded product was determined based on the following formula. Regarding this numerical value, a smaller value gave more excellent molding stability, and when the value was less than 10%, it was determined that there was no practical problem in the molding stability.

[Mathematical Formula 1]

Drop rate of limiting viscosity of molded product
= 100 × (limiting viscosity of pellet - limiting viscosity of molded product) / limiting viscosity of pellet

⊙; Less than 4%;
○; Less than 7%;
△; Less than 10%; (no practical problem) and
×; 10% or more.

(5) External appearance properties

A resin composition was molded at a resin temperature of 340°C and a molding cycle of 30 seconds using an injection molding machine (J35AD made by The Japan Steel Works, Ltd.) to prepare a test piece as shown in FIG. 1. The surface appearance of the obtained test piece was visually judged according to the following criteria.

⊙: Silica particles do not float at all on the surface of the molded product and do not appear white, and the surface is completely smooth;
○: Silica particles slightly float on the surface of the molded product, but do not appear white, and the surface is smooth;
△: Silica particles slightly float on the surface of the molded product, but only appear slightly white, and the surface is smooth (no practical problem); and
×: Silica particles float on the surface of the molded product and appear white, and the surface is not smooth.

(6) Tumbling test (dust-generating resistance property)

A resin composition was molded at a resin temperature of 340°C and a molding cycle of 30 seconds using an injection molding machine (J35AD made by The Japan Steel Works, Ltd.) to prepare a test piece as shown in FIG. 1.
Into a stainless steel container (inner diameter: 70 mm, height: 180 mm) were placed 100 test pieces, and the container was set in a shaker SA300 made by Yamato Scientific Co., Ltd., and vibration at 300 times/min was given thereto for 24 hours. After a lapse of 24 hours, a molded product was taken out from the container, and a dust generation rate was determined based on the following formula. Regarding this numerical value, a smaller value gave more excellent dust-generating resistance property, and when the value was less than 0.1%, it was determined that there was no practical problem in the dust-generating resistance property. A total mass of the 100 test pieces after the test is the mass after dust and the like attached to the surfaces are removed by air cleaning.

[Mathematical Formula 2]

Dust generation rate
= 100 × (total mass of 100 test pieces before test - total mass of 100 test pieces after test) / total mass of 100 test pieces before test

⊙; Less than 0.04%;
○; Less than 0.07%;
△: Less than 0.10% (no problem in practical use); and
×; 0.10% or more.

(7) Dynamic friction coefficient

A resin composition was molded at a resin temperature of 340°C and a molding cycle of 30 seconds using an injection molding machine (made by TOSHIBA MACHINE CO., LTD., model number: EC100N II) to prepare a plate-shaped test piece (70 mm in length × 40 mm in width × 2 mmt in thickness).

A dynamic friction coefficient was measured in accordance with JIS K 7218 A method using a Suzuki type continuous friction wear tester (model No. 283-S-PC made by YASUDA SEIKI SEISAKUSHO, LTD.) under conditions including a speed of 0.1 m/s and a load of 0.5 MPa. A sliding partner material (S45C ring, outer diameter φ 25.6 mm, inner diameter φ 20 mm, length 15 mm) was rotated with respect to the plate-shaped test piece. A dynamic friction coefficient of 0.3 or less was judged as "no problem in practical use".

⊙; 0.23 or less;
○; 0.27 or less;
△; 0.30 or less (no problem in practical use) and
×; More than 0.30.

(8) Antistatic performance

A resin composition was molded at a resin temperature of 340°C and a molding cycle of 30 seconds using an injection molding machine (made by TOSHIBA MACHINE CO., LTD., model number: EC100N II) to prepare a disk test piece. A surface resistivity of the obtained test piece was measured using a digital ultra-high resistance/micro ammeter (R8340A made by Advantest Corporation). A surface resistivity of $10^{11}$ Ω or less was defined as having antistatic performance. In order to suppress adhesion of dust on a molded body, the surface resistivity is preferably $10^{11}$ Ω or less.

⊙; $10^9$ Ω or less;
○; $10^{10}$ Ω or less;
△; $10^{11}$ Ω or less; and
×; More than $10^{11}$ Ω.

[Examples 1 to 19 and Comparative Examples 1 to 14]

Raw materials were melt-kneaded at a barrel temperature of 320°C and at a blending ratio shown in Tables 1 to 4 using a corotating twin screw extruder (made by TOSHIBA MACHINE CO., LTD., model number: TEM-37BS). A resin composition drawn in a strand form from a nozzle was cooled and solidified by soaking in a water bath, and after cutting with a pelletizer, the cut pieces of the resin composition were dried by hot air at 120°C for 12 hours to obtain a resin composition (pellet).

The compositions of the resin compositions obtained in Examples and Comparative Examples and the evaluation results thereof are shown in Tables 1 to 4.

[Table 1]

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| Composition of resin | Polyarylate resin (mass%) | 30 | 90 | 30 | 30 | 30 | 30 | 30 | 30 | 30 | 30 | 30 | 30 |
| | Polycarbonate resin (mass%) | 70 | 10 | 70 | 70 | 70 | 70 | 70 | 70 | 70 | 70 | 70 | 70 |
| | Total amount of polyarylate resin + polycarbonate resin (parts by mass) | 100 | 100 | 100 | 100 | 100 | 100 | 100 | 100 | 100 | 100 | 100 | 100 |
| | Silica 0.5 (parts by mass) | - | - | - | - | 25 | - | - | - | - | - | - | - |
| | Silica 5.0 (parts by mass) | 10 | 25 | 5 | 60 | - | - | 25 | 25 | 25 | 25 | 25 | 25 |
| | Silica 10 (parts by mass) | - | - | - | - | - | 25 | - | - | - | - | - | - |
| | Polytctrafluoroethylene resin 2.0 (parts by mass) | - | - | - | - | - | - | 3 | - | - | - | - | - |
| | Polytetrafluoroethylene resin 5.0 (parts by mass) | 3 | 3 | 5 | 1 | 5 | 5 | - | 5 | 10 | 3 | 3 | - |
| | Baked polytetrafluoroethylene resin 4.5 (parts by mass) | - | - | - | - | - | - | - | - | - | - | - | 3 |
| | PEP-36 (parts by mass) | 0.05 | 0.05 | 0.05 | 0.05 | 0.05 | 0.05 | 0.01 | 1.0 | 0.05 | 0.025 | - | 0.05 |
| | S-9228PC (parts by mass) | - | - | - | - | - | - | - | - | - | - | 0.05 | - |
| | Irganox 1010 (parts by mass) | - | - | - | - | - | - | - | - | 0.05 | 0.025 | - | - |
| | Release agent (parts by mass) | - | - | - | - | - | - | - | - | - | 0.2 | - | - |
| | Carbon black (parts by mass) | 0.5 | 0.5 | 0.5 | 0.5 | 0.5 | 0.5 | 0.5 | 0.5 | 0.5 | 0.5 | 0.5 | 0.5 |
| Evaluation | Flexural strength (MPa) | 102⊙ | 103⊙ | 88△ | 115⊙ | 102⊙ | 102⊙ | 102⊙ | 102⊙ | 102⊙ | 102⊙ | 102⊙ | 102⊙ |
| | DTUL (1.8MPa)(°C) | 152⊙ | 173⊙ | 151○ | 152⊙ | 152⊙ | 152⊙ | 152⊙ | 152⊙ | 152⊙ | 152⊙ | 152⊙ | 152⊙ |
| | Dimensional stability (%) | -0.06⊙ | -0.04⊙ | -0.09△ | -0.03⊙ | -0.06⊙ | -0.06⊙ | -0.06⊙ | -0.06⊙ | -0.06⊙ | -0.06⊙ | -0.06⊙ | -0.06⊙ |
| | Molding stability (%) | 3⊙ | 4○ | 4○ | 4○ | 4○ | 4○ | 6○ | 5○ | 3⊙ | 3⊙ | 6.5○ | 6○ |
| | External appearance properties | ⊙ | ⊙ | ⊙ | ⊙ | △ | ⊙ | ⊙ | ⊙ | ⊙ | ⊙ | ⊙ | ⊙ |
| | Tumbling test (wt%) | 0.01⊙ | 0.03⊙ | 0.01⊙ | 0.05○ | 0.01⊙ | 0.01⊙ | 0.03⊙ | 0.03⊙ | 0.01⊙ | 0.01⊙ | 0.04○ | 0.09△ |
| | Dynamic friction coefficient | 0.23⊙ | 0.25○ | 0.23⊙ | 0.27○ | 0.23⊙ | 0.23⊙ | 0.24○ | 0.23⊙ | 0.20⊙ | 0.25○ | 0.24○ | 0.30△ |
| | Overall evaluation | ⊙ | ○ | △ | ○ | △ | ○ | ○ | ○ | ⊙ | ○ | ○ | △ |

-; This component was not used.

[Table 2]

| | | Example 13 | Example 14 | Example 15 | Example 16 | Example 17 | Example 18 | Example 19 |
|---|---|---|---|---|---|---|---|---|
| Composition of resin | Polyarylate resin (mass%) | 30 | 30 | 30 | 30 | 30 | 30 | 60 |
| | Polycarbonate resin (mass%) | 70 | 70 | 70 | 70 | 70 | 70 | 40 |
| | Total amount of polyarylate resin + polycarbonate resin (parts by mass) | 100 | 100 | 100 | 100 | 100 | 100 | 100 |
| | Silica 0.5 (parts by mass) | - | 25 | - | - | - | - | - |
| | Silica 5.0 (parts by mass) | 5 | - | 25 | 25 | 25 | 10 | 10 |
| | Silica 10 (parts by mass) | - | - | - | - | - | - | - |
| | Polytetrafluoroethylene resin 2.0 (parts by mass) | - | - | 3 | - | - | - | - |
| | Polytetrafluoroethylene resin 5.0 (parts by mass) | 5 | 5 | - | 3 | 3 | 3 | 3 |
| | Multi-walled carbon nanotube (parts by mass) | 3 | 5 | 1 | 3 | 10 | 4 | - |
| | PEP-36 (parts by mass) | 0.05 | 0.05 | 0.01 | 0.025 | - | 0.05 | 0.05 |
| | S-9228PC (parts by mass) | - | - | - | - | 0.05 | - | - |
| | Irganox 1010 (parts by mass) | - | - | - | 0.025 | - | - | - |
| | Release agent (parts by mass) | - | - | - | 0.2 | - | - | - |
| | Carbon black (parts by mass) | - | - | - | - | - | - | 0.5 |
| Evaluation | Flexural strength (MPa) | 88△ | 102⊙ | 102⊙ | 102⊙ | 102⊙ | 102⊙ | 102⊙ |
| | DTUL (1.8MPa)(°C) | 151○ | 152⊙ | 152⊙ | 152⊙ | 152⊙ | 152⊙ | 162⊙ |
| | Dimensional stability (%) | -0.09△ | -0.06⊙ | -0.06⊙ | -0.06⊙ | -0.06⊙ | -0.06⊙ | -0.06⊙ |
| | Molding stability (%) | 4○ | 4○ | 6○ | 3⊙ | 6.5○ | 3⊙ | 3⊙ |
| | External appearance properties | ⊙ | △ | ⊙ | ⊙ | ⊙ | ⊙ | ⊙ |
| | Tumbling test (wt%) | 0.01⊙ | 0.01⊙ | 0.03⊙ | 0.01⊙ | 0.04○ | 0.01⊙ | 0.01⊙ |
| | Dynamic friction coefficient | 0.23⊙ | 0.23⊙ | 0.24○ | 0.25○ | 0.24○ | 0.23⊙ | 0.23⊙ |
| | Overall evaluation | △ | △ | ○ | ○ | ○ | ⊙ | ⊙ |
| | Surface resistivity (Ω) | $10^9$⊙ | $10^8$⊙ | $10^{11}$△ | $10^9$⊙ | $10^7$⊙ | $10^8$⊙ | * |

-; This component was not used. "Overall evaluation" refers to overall evaluation of the evaluation results of the flexural strength, the DTUL (heat-resisting properties), the dimensional stability, the molding stability, the external appearance properties, the tumbling test (dust-generating resistance property), and the dynamic friction coefficient (sliding properties).
*; Not measured.

[Table 3]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Composition of resin | Polyarylate resin (mass%) | 20 | 95 | 30 | 30 | 30 | 30 | 30 | 30 | 30 | 30 |
| | Polycarbonate resin (mass%) | 80 | 5 | 70 | 70 | 70 | 70 | 70 | 70 | 70 | 70 |
| | Total amount of polyarylate resin + polycarbonate resin (parts by mass) | 100 | 100 | 100 | 100 | 100 | 100 | 100 | 100 | 100 | 100 |
| | Silica 0.3 (parts by mass) | - | - | - | - | - | - | - | - | - | - |
| | Silica 0.5 (parts by mass) | - | - | - | - | - | - | - | - | - | - |
| | Silica 5.0 (parts by mass) | 25 | 25 | 3 | 70 | - | 25 | 25 | 25 | - | 25 |
| | Silica 10 (parts by mass) | - | - | - | - | - | - | - | - | - | - |
| | Silica 15 (parts by mass) | - | - | - | - | 25 | - | - | - | - | - |
| | Alumina 3.0 (parts by mass) | - | - | - | - | - | - | - | - | 25 | - |
| | Polytetrafluoroethylene resin 5.0 (parts by mass) | 3 | 3 | 3 | 3 | 3 | 3 | 3 | 3 | 3 | 3 |
| | PEP-36 (parts by mass) | 0.05 | 0.05 | 0.05 | 0.05 | 0.05 | 0.005 | 1.5 | - | 0.05 | - |
| | PEP-8 (parts by mass) | - | - | - | - | - | - | - | 0.05 | - | - |
| | Carbon black (parts by mass) | 0.5 | 0.5 | 0.5 | 0.5 | 0.5 | 0.5 | 0.5 | 0.5 | 0.5 | 0.5 |
| Evaluation | Flexural strength (MPa) | 100○ | 101○ | 85△ | (B)× | 102⊙ | 102⊙ | 102⊙ | 102⊙ | 90△ | 102⊙ |
| | DTUL (1.8MPa)(°C) | 145× | 175⊙ | 150○ | * | 152⊙ | 152⊙ | 152⊙ | 152⊙ | 149△ | 152⊙ |
| | Dimensional stability (%) | -0.15× | -0.04⊙ | -0.12× | * | -0.14× | -0.06⊙ | -0.06⊙ | -0.06⊙ | -0.11× | -0.06⊙ |
| | Molding stability (%) | 4○ | (A)× | 4○ | * | 4○ | 12× | 10× | 13× | 8△ | 14× |
| | External appearance properties | ⊙ | (A)× | ⊙ | * | ⊙ | ⊙ | ⊙ | ⊙ | ⊙ | ⊙ |
| | Tumbling test (wt%) | 0.09△ | (A)× | 0.08△ | * | 0.08△ | 0.11× | 0.11× | 0.11× | 0.08△ | 0.15× |
| | Dynamic friction coefficient | 0.26○ | 0.25○ | 0.24○ | 0.23⊙ | 0.25○ | 0.25○ | 0.25○ | 0.25○ | 0.26○ | 0.25○ |
| | Overall evaluation | × | × | × | × | × | × | × | × | × | × |

-; This component was not used. (A); Failed to mold due to poor fluidity. (B); Impossible to extrude because of no drawn strand. *; Not evaluated.

[Table 4]

| | | Comparative Example 11 | Comparative Example 12 | Comparative Example 13 | Comparative Example 14 |
|---|---|---|---|---|---|
| Composition of resin | Polyarylate resin (mass%) | 30 | 30 | 30 | 30 |
| | Polycarbonate resin (mass%) | 70 | 70 | 70 | 70 |
| | Total amount of polyarylate resin + polycarbonate resin (parts by mass) | 100 | 100 | 100 | 100 |
| | Silica 5.0 (parts by mass) | 25 | 25 | 25 | 25 |
| | Polytetrafluoroethylene resin 5.0 (parts by mass) | - | 15 | - | - |
| | Polytetrafluoroethylene resin 30 (parts by mass) | - | - | 3 | - |
| | Baked polytetrafluoroethylene resin 4.5 (parts by mass) | - | - | - | 3 |
| | PEP-36 (parts by mass) | 0.05 | 0.05 | 0.05 | - |
| | Carbon black (parts by mass) | 0.5 | 0.5 | 0.5 | 0.5 |
| Evaluation | Flexural strength (MPa) | 102⊙ | 102⊙ | 102⊙ | 102⊙ |
| | DTUL (1.8MPa)(°C) | 152⊙ | 152⊙ | 152⊙ | 152⊙ |
| | Dimensional stability (%) | -0.06⊙ | -0.05⊙ | -0.06⊙ | -0.06⊙ |
| | Molding stability (%) | 4○ | 15× | 13× | 13× |
| | External appearance properties | ⊙ | ⊙ | ⊙ | ⊙ |
| | Tumbling test (wt%) | 0.20× | 0.05○ | 0.04○ | 0.18× |
| | Dynamic friction coefficient | 0.50× | 0.20⊙ | 0.30△ | 0.30△ |
| | Overall evaluation | × | × | × | × |

-; This component was not used.

All of the resin compositions of Example 1 to 19 were excellent in the dust-generating resistance property, the sliding properties, and the external appearance properties while being excellent in the strength, the heat-resisting properties, the dimensional stability, and the molding stability.

The resin compositions of Examples 13 to 18 were further excellent in antistatic performance.

In the resin composition of Comparative Example 1, with respect to the mass ratio of the polyarylate resin and the polycarbonate resin, since the ratio of the polyarylate resin was too low, the heat-resisting properties and the dimensional stability were deteriorated.

In the resin composition of Comparative Example 2, with respect to the mass ratio of the polyarylate resin and the polycarbonate resin, since the ratio of the polyarylate resin was too high, the fluidity was poor, failing to mold the resin composition.

In the resin composition of Comparative Example 3, since the content of silica particles was too small, the dimensional stability was deteriorated.

In the resin composition of Comparative Example 4, since the content of silica particles was too large, pelletization by extrusion during melt-kneading became difficult.

In the resin composition of Comparative Example 5, since the average particle diameter of silica particles was too large, the dimensional stability was deteriorated.

In the resin compositions of Comparative Examples 6 and 7, since the content of the specific phosphite ester compound was too small or too large, the molding stability and the dust-generating resistance property were deteriorated.

In the resin composition of Comparative Example 8, since the phosphite ester compound different in kind from the specific phosphite ester compound was used, the molding stability and the dust-generating resistance property were deteriorated.

In the resin composition of Comparative Example 9, since alumina particles were contained instead of silica particles, the dimensional stability was deteriorated.

In the resin compositions of Comparative Examples 10 and 14, since the specific phosphite ester compound was not contained, the molding stability and the dust-generating resistance property were deteriorated.

In the resin composition of Comparative Example 11, since the fluorine atom-containing polymer particles were not used, the dust-generating resistance property and the sliding properties were deteriorated.

In the resin composition of Comparative Example 12, since the content of the fluorine atom-containing polymer particles was too large, the molding stability was deteriorated.

In the resin composition of Comparative Example 13, since the average particle diameter of the fluorine atom-containing polymer particles was too large, the molding stability was deteriorated.

INDUSTRIAL APPLICABILITY

The resin composition of the present invention is useful for molding a camera module component, a lens unit

component, and an actuator component used in a mobile phone, a game machine, a personal computer, an in-vehicle camera, a mobile phone terminal, and the like.

## Claims

**1.** A resin composition comprising a polyarylate resin, a polycarbonate resin, silica particles having an average particle diameter of 0.4 to 12 μm, fluorine atom-containing polymer particles having an average particle diameter of 0.5 to 20 μm, and a phosphite ester compound represented by a general formula (I),

wherein a mass ratio of the polyarylate resin and the polycarbonate resin is 25/75 to 92/8,
a content of the silica particles is 4 to 65 parts by mass with respect to 100 parts by mass of a total amount of the polyarylate resin and the polycarbonate resin,
a content of the fluorine atom-containing polymer particles is 0.5 to 12 parts by mass with respect to 100 parts by mass of a total amount of the polyarylate resin and the polycarbonate resin, and
a content of the phosphite ester compound is 0.008 to 1.2 parts by mass with respect to 100 parts by mass of a total amount of the polyarylate resin and the polycarbonate resin:

[Chem. 1]

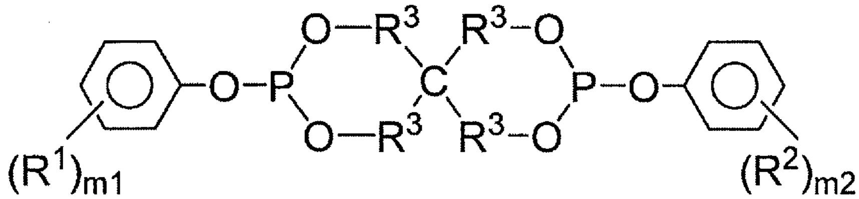

(I)

(wherein m1 and m2 are each independently an integer of 0 to 5;
$R^1$ and $R^2$ each independently represent an alkyl group having 1 to 12 carbon atoms, which may have a substituent; and
four $R^3$s each independently represent an alkylene group having 1 to 5 carbon atoms).

**2.** The resin composition of Claim 1, wherein the resin composition further comprises carbon nanotubes in an amount of 0.5 to 15 parts by mass with respect to 100 parts by mass of a total amount of the polyarylate resin and the polycarbonate resin.

**3.** The resin composition of Claim 1 or 2, wherein the phosphite ester compound is a compound represented by a general formula (I-1):

[Chem. 2]

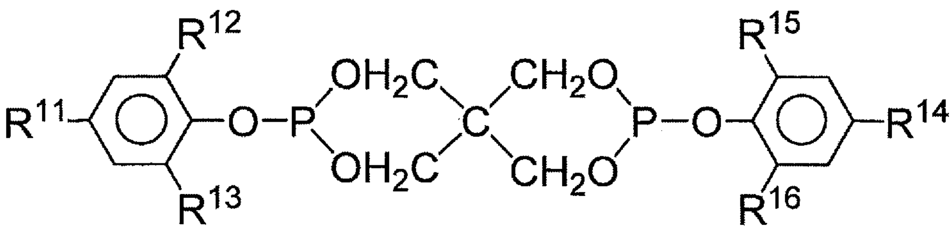

(I-1)

(wherein $R^{11}$ to $R^{16}$ are each independently a hydrogen atom or an alkyl group having 1 to 10 carbon atoms, which may have a substituent).

**4.** The resin composition of any of Claims 1 to 3, wherein the resin composition further comprises a hindered phenol compound represented by a general formula (II) in an amount of 0.01 to 1 part by mass with respect to 100 parts by mass of a total amount of the polyarylate resin and the polycarbonate resin:

[Chem. 3]

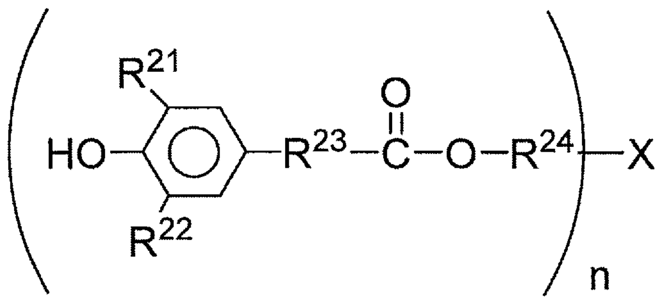

(II)

(wherein X represents a hydrocarbon group or an ether group;

n is an integer of 1 or more determined according to X;
$R^{21}$ and $R^{22}$ each independently represent a hydrogen atom or an alkyl group having 1 to 9 carbon atoms; and
$R^{23}$ and $R^{24}$ each independently represent an alkylene group having 1 to 5 carbon atoms).

**5.** The resin composition of any of Claims 1 to 4, wherein the fluorine atom-containing polymer particles are unbaked fluorine atom-containing polymer particles.

**6.** The resin composition of any of Claims 1 to 5, wherein the content of the silica particles is 4 to 50 parts by mass with respect to 100 parts by mass of a total amount of the polyarylate resin and the polycarbonate resin.

**7.** The resin composition of any of Claims 1 to 4, wherein

the content of the silica particles is 8 to 62 parts by mass with respect to 100 parts by mass of a total amount of the polyarylate resin and the polycarbonate resin,
the silica particles have an average particle diameter of 2 to 12 $\mu$m, and
the fluorine atom-containing polymer particles are unbaked fluorine atom-containing polymer particles.

**8.** The resin composition of Claim 7, wherein

the mass ratio of the polyarylate resin and the polycarbonate resin is 25/75 to 70/30,
the content of the silica particles is 8 to 50 parts by mass with respect to 100 parts by mass of a total amount of the polyarylate resin and the polycarbonate resin,
the silica particles have an average particle diameter of 2 to 8 $\mu$m,
the content of the phosphite ester compound is 0.03 to 0.5 parts by mass with respect to 100 parts by mass of a total amount of the polyarylate resin and the polycarbonate resin, and
in the phosphite ester compound, the m1 and the m2 are each independently an integer of 1 to 3, the $R^1$ and the $R^2$ each independently represent an alkyl group having 1 to 12 carbon atoms and no substituent, and the four $R^3$s each independently represent an alkylene group having 1 to 3 carbon atoms.

**9.** The resin composition of any of Claims 1 to 8, wherein the fluorine atom-containing polymer is at least one kind of polymer selected from a group consisting of polytetrafluoroethylene, polyvinylidene fluoride, tetrafluoroethylene-perfluoromethyl vinyl ether copolymer, tetrafluoroethylene-hexafluoropropylene copolymer, and tetrafluoroethylene-ethylene copolymer.

**10.** A molded product comprising the resin composition of any of Claims 1 to 9.

**11.** The molded product of Claim 10, wherein the molded product is a camera module component.

**12.** The molded product of Claim 10, wherein the molded product is a lens unit component.

**13.** The molded product of Claim 10, wherein the molded product is an actuator component.

Fig.1

(A)

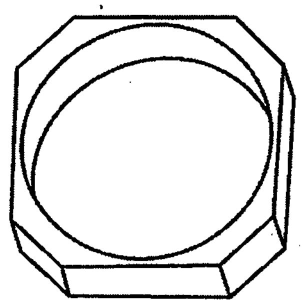

(B)

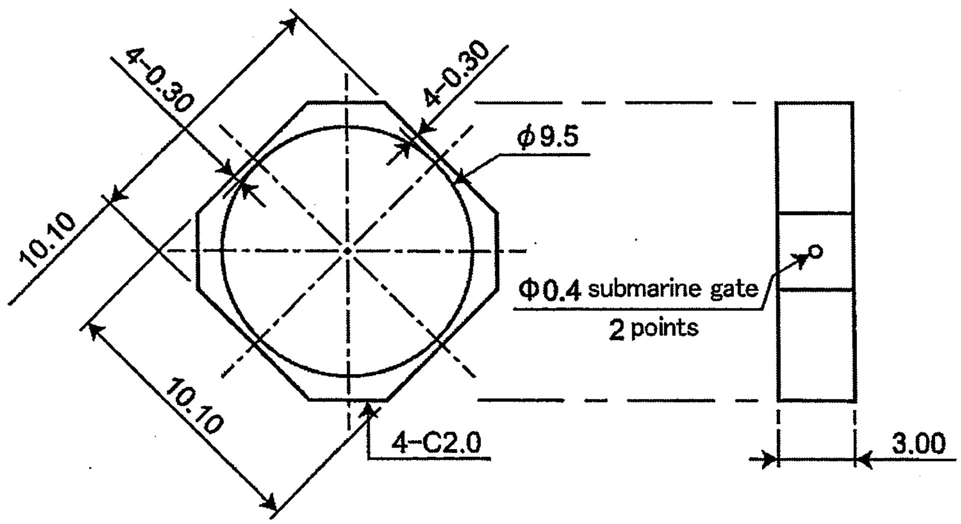

## INTERNATIONAL SEARCH REPORT

International application No.
PCT/JP2020/038504

A. CLASSIFICATION OF SUBJECT MATTER
C08K 5/526(2006.01)i; C08L 27/12(2006.01)i; C08L 67/03(2006.01)i; C08L 69/00(2006.01)i; C08K 3/04(2006.01)i; C08K 3/36(2006.01)i
FI: C08L67/03; C08L69/00; C08K3/36; C08L27/12; C08K5/526; C08K3/04
According to International Patent Classification (IPC) or to both national classification and IPC

B. FIELDS SEARCHED
Minimum documentation searched (classification system followed by classification symbols)
C08K3/00-13/08; C08L27/00-27/24; C08L67/00-69/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2017/204078 A1 (UNITIKA LTD.) 30 November 2017 (2017-11-30) claims, paragraphs [0008], [0065], [0075], examples | 1-13 |
| Y | JP 2016-108526 A (MITSUBISHI ENGINEERING-PLASTICS CORPORATION) 20 June 2016 (2016-06-20) claims, paragraphs [0061]-[0064], [0098], examples | 1-13 |
| Y | JP 2007-196516 A (UNITIKA LTD.) 09 August 2007 (2007-08-09) claims, paragraph [0012], examples | 1-13 |
| Y | JP 2006-291081 A (IDEMITSU KOSAN CO., LTD.) 26 October 2006 (2006-10-26) claims, paragraphs [0012], [0013], examples | 2 |
| Y | JP 2009-62461 A (DAINICHISEIKA COLOR & CHEMICALS MFG. CO., LTD.) 26 March 2009 (2009-03-26) claims, paragraphs [0032], [0051], examples | 2 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 December 2020 (08.12.2020) | 15 December 2020 (15.12.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/038504

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-155929 A (ASAHI KASEI CHEMICALS CORP.) 15 July 2010 (2010-07-15) claims, paragraph [0030], examples | 2 |
| A | JP 10-87982 A (GE PLASTICS JAPAN LTD.) 07 April 1998 (1998-04-07) claims, examples | 1-13 |

Form PCT/ISA/210 (continuation of second sheet) (January 2015)

**INTERNATIONAL SEARCH REPORT**
Information on patent family members

International application No.
PCT/JP2020/038504

| Patent Documents referred in the Report | Publication Date | Patent Family | Publication Date |
|---|---|---|---|
| WO 2017/204078 A1 | 30 Nov. 2017 | EP 3467031 A1<br>claims, paragraphs [0010], [0077], [0087], examples<br>CN 109071932 A<br>KR 10-2019-0013745 A | |
| JP 2016-108526 A | 20 Jun. 2016 | (Family: none) | |
| JP 2007-196516 A | 09 Aug. 2007 | (Family: none) | |
| JP 2006-291081 A | 26 Oct. 2006 | (Family: none) | |
| JP 2009-62461 A | 26 Mar. 2009 | (Family: none) | |
| JP 2010-155929 A | 15 Jul. 2010 | (Family: none) | |
| JP 10-87982 A | 07 Apr. 1998 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008050488 A
- WO 2017204078 A1